# EUROPÄISCHE PATENTSCHRIFT

(11) **EP 3 481 594 B1**
(45) Veröffentlichungstag und Bekanntmachung des Hinweises auf die Patenterteilung: **22.06.2022**
(21) Anmeldenummer: 17739958.1
(22) Anmeldetag: 11.07.2017
(51) Int. Cl.: B25B 21/00, B25F 5/00, B25B 21/02

(54) **HANDWERKZEUGMASCHINENVORRICHTUNG**
HAND-HELD POWER TOOL DEVICE
SYSTÈME DE MACHINE-OUTIL PORTATIVE

(30) Priorität: 11.07.2016 DE 102016212599; 10.07.2017 DE 102017211779
(43) Veröffentlichungstag der Anmeldung: 15.05.2019
(73) Patentinhaber: Robert Bosch GmbH, 70442 Stuttgart (DE)
(72) Erfinder: BLUM, Jens, 70794 Filderstadt (DE); HERR, Tobias, 70569 Stuttgart (DE)
(86) Internationale Anmeldenummer: PCT/EP2017/067404
(87) Internationale Veröffentlichungsnummer: WO 2018/011207

(56) Entgegenhaltungen:
- EP-A1- 2 777 891
- EP-A2- 2 769 789
- EP-A2- 2 813 327
- DE-A1-102010 043 099

## Beschreibung

### Stand der Technik

Es ist bereits eine Handwerkzeugmaschinenvorrichtung mit zumindest einer Zwischenwelle, welche als ein Planetenradträger ausgebildet ist und eine in Umfangsrichtung angeordnete Mehrzahl von Planetenradaufnahmen und Planetenradlagerstellen aufweist, vorgeschlagen worden.

Aus der DE 10 2010 043099 A1 ist eine Handwerkzeugmaschine mit den Merkmalen des Oberbegriffs des Anspruchs 1 und mit einem mechanischen Schlagwerk bekannt, das einen mit mindestens einem Antriebsnocken versehenen Schlagkörper und eine mit mindestens einem Abtriebsnocken versehene Abtriebswelle aufweist, die mit einer Werkzeugaufnahme zur Aufnahme eines Werkzeugs verbunden ist.

EP 2 777 891 A1 beschreibt eine Kupplung für eine Handwerkzeugmaschine umfassend einen Einstellring, der relativ zu einem Gehäuse der Handwerkzeugmaschine axial bewegbar ausgebildet ist, wenn der Einstellring gedreht wird.

Die EP 2 769 789 A2 offenbart eine Bohrvorrichtung, bestehend aus einer einen Motor aufweisenden Bohrmaschine, die eine in einem Maschinengehäuse drehbar gelagerte Bohrspindel aufweist, und einem Bohrfutter mit einem Futterkörper, in dem mittels einer zwischen einem Gewindeglied und einem Gewindegegenglied ausgebildeten Gewindeverbindung verstellbare Spannbacken geführt sind und eine mit dem Gewindegegenglied drehfest verbundene und mittels des Motors antreibbare Antriebshülse vorgesehen ist.

In der US 5,269,733 wird eine Handwerkzeugmaschine mit einem zweigeteilten Gehäuse beschrieben, wobei ein Antriebsmotor ein Ritzel auf einer Motorwelle aufweist.

Offenbarung der Erfindung

Die Erfindung geht aus von einer Handwerkzeugmaschinenvorrichtung nach Anspruch 1.

Unter einer "Handwerkzeugmaschinenvorrichtung" soll in diesem Zusammenhang insbesondere zumindest ein Teil, insbesondere eine Unterbaugruppe, einer Handwerkzeugmaschine verstanden werden. Insbesondere kann die Handwerkzeugmaschinenvorrichtung auch die gesamte Handwerkzeugmaschine umfassen. Die Handwerkzeugmaschine kann dabei als beliebige, vorteilhaft elektrische Maschine ausgebildet sein, vorteilhaft jedoch als Drehschlagschrauber. Unter einer "Zwischenwelle" soll insbesondere eine Welle eines Antriebsstrangs verstanden werden, welche insbesondere zwischen einer Antriebseinheit und einer Abtriebswelle, insbesondere einer Handwerkzeugmaschine, angeordnet ist. Insbesondere ist die zumindest eine Zwischenwelle dazu vorgesehen, insbesondere eine von der Antriebseinheit erzeugte Kraft und/oder

Bewegung direkt und/oder indirekt auf die Abtriebswelle zu übertragen. Insbesondere ist die Zwischenwelle als ein Planetenradträger des Planetengetriebes eines Drehschlagwerks ausgebildet. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Unter einem "Drehschlagwerk" soll in diesem Zusammenhang insbesondere ein Schlagwerk verstanden werden, welches dazu vorgesehen ist, eine zumindest im Wesentlichen kontinuierliche Leistungsabgabe einer Antriebseinheit in einen schlagförmigen Drehimpuls umzuwandeln. Das Drehschlagwerk kann insbesondere als ein Nockendrehschlagwerk oder als ein V-Nutendrehschlagwerk ausgebildet sein. Unter einem "Planetengetriebe" soll insbesondere ein Getriebe verstanden werden, welches wenigstens einen mit einem Planetenradträger verbundenes Planetenrad aufweist, der in radiale Richtung nach außen mit einem Hohlrad und/oder in radialer Richtung nach innen mit einem Sonnenrad gekoppelt ist. Das Sonnenrad, das Planetenrad und/oder das Hohlrad können insbesondere von runden Zahnrädern oder von aufeinander abgestimmten unrunden Zahnrädern gebildet sein. Es können mehrere Planetengetriebe hintereinander geschaltet sein und/oder es können zwischen Planetenrad und Hohlrad mehrere Stufen zwischengeschaltet sein. Unter einem "Hohlrad" soll insbesondere ein Getrieberad verstanden werden, das einen Kranz aufweist, der in Form eines Zylindermantels oder in Form eines unterbrochenen Zylindermantels ausgebildet ist.

Unter einer "Planetenradaufnahme" soll in diesem Zusammenhang insbesondere eine Aufnahme der Zwischenwelle verstanden werden, welche zu einer insbesondere teilweisen Anordnung eines Planetenrads vorgesehen ist. Unter einer "Planetenradlagerstelle" soll insbesondere eine Stelle innerhalb einer Planetenradaufnahme verstanden werden, an welcher das Planetenrad in einem montierten Zustand drehbar innerhalb der Planetenradaufnahme gelagert ist. Insbesondere weist die Zwischenwelle drei Planetenradaufnahmen mit jeweils einer Planetenradlagerstelle auf. Die Planetenradlagerstellen sind insbesondere zumindest im Wesentlichen um jeweils 120° versetzt zueinander in Umfangsrichtung an der Zwischenwelle angeordnet. Insbesondere sind die Planetenradaufnahmen durch sich radial zu einer Längserstreckungsrichtung der Zwischenwelle erstreckende Stege voneinander getrennt. Entlang der Längserstreckungsrichtung der Zwischenwelle betrachtet sind die Planetenradradaufnahmen durch zwei scheibenförmige Wandungselemente begrenzt, welche zumindest im Wesentlichen senkrecht zur Längserstreckungsrichtung angeordnet sind. Der Ausdruck "im Wesentlichen senkrecht" soll hier insbesondere eine Ausrichtung einer Richtung relativ zu einer Bezugsrichtung definieren, wobei die Richtung und die Bezugsrichtung, insbesondere in einer Ebene betrachtet, einen Winkel von 90° einschließen und der Winkel eine maximale Abweichung von insbesondere kleiner als 8°, vorteilhaft kleiner als 5° und besonders vorteilhaft kleiner als 2° aufweist. Die Wandungselemente sind zumindest im Wesentlichen kreisförmig ausgebildet. Insbesondere sind die Wandungselemente einstückig mit der Zwischenwelle ausgebildet. Unter "einstückig" soll insbesondere zumindest stoffschlüssig verbunden verstanden werden, beispielsweise durch einen Schweißprozess, einen Klebeprozess, einen Anspritzprozess und/oder einen anderen, dem Fachmann als sinnvoll erscheinenden Prozess, und/oder vorteilhaft in einem Stück geformt verstanden werden, wie beispielsweise durch eine Herstellung aus einem Guss und/oder durch eine Herstellung in einem Ein- oder Mehrkomponentenspritzverfahren und vorteilhaft aus einem einzelnen Rohling. Die Wandungselemente sind insbesondere zumindest im Wesentlichen konzentrisch zu einer Rotationsachse der Zwischenwelle angeordnet.

Die Materialaussparung ist insbesondere in eines der Wandungselemente eingebracht. Insbesondere ist die Materialaussparung in ein Wandungselement eingebracht, welches in einem montierten Zustand der Zwischenwelle in einer Handwerkzeugmaschine in Richtung einer Antriebseinheit angeordnet ist. Vorzugsweise entspricht eine Anzahl von Materialaussparungen einer Anzahl von Planetenradaufnahmen. Vorzugsweise ist jeder Planetenradaufnahme genau eine Materialaussparung zugeordnet.

Durch eine derartige Ausgestaltung kann eine gattungsgemäße Handwerkzeugmaschinenvorrichtung mit vorteilhaften konstruktiven Eigenschaften bereitgestellt werden. Insbesondere kann durch die Materialaussparung eine vorteilhafte Gewichtsoptimierung der Zwischenwelle erreicht werden. Ferner kann die Materialaussparung vorteilhaft als eine Schmiertasche verwendet werden, wodurch vorteilhaft ein einfaches Nachschmieren von Planetenrädern erreicht werden kann.

Ferner wird vorgeschlagen, dass die Materialaussparung zumindest im Wesentlichen kreissegmentförmig ist. Unter "kreissegmentförmig" soll in diesem Zusammenhang insbesondere eine geometrische Form verstanden werden, die zumindest im Wesentlichen von einer Teilfläche einer Kreisfläche, die von einem Kreisbogen und einer Kreissehne begrenzt wird, gebildet ist. Unter "zumindest im Wesentlichen kreissegmentförmig" soll in diesem Zusammenhang insbesondere verstanden werden, dass die Kontur der Materialaussparung zumindest zu 80 %, vorzugsweise zumindest zu 90 % und besonders bevorzugt zumindest zu 95 % kreissegmentförmig ausgebildet ist. Hierdurch kann die Materialaussparung eine vorteilhafte Geometrie, insbesondere hinsichtlich einer vorteilhaft einfachen Herstellung, aufweisen.

Ferner wird vorgeschlagen, dass die Planetenradaufnahmen zumindest im Wesentlichen zylindersegmentförmig ausgebildet sind. Unter "zumindest im Wesentlichen "zylindersegmentförmig" soll in diesem Zusammenhang insbesondere verstanden werden, dass die Kontur der Materialaussparung zumindest zu 80 %, vorzugsweise zumindest zu 90 % und besonders bevorzugt zumindest zu 95 % kreissegmentförmig ausgebildet ist. Hierdurch kann die Planetenradaufnahme eine vorteilhafte Geometrie, insbesondere hinsichtlich einer vorteilhaft einfachen Herstellung und/oder einer Aufnahme von Planetenrädern, aufweisen.

Des Weiteren wird vorgeschlagen, dass die Materialaussparung bei einer Herstellung der Zwischenwelle zu einer zeitweisen zumindest teilweisen Aufnahme einer Fräskopfspindel vorgesehen ist. Darunter, dass die Materialaussparung zu einer "zeitweisen Aufnahme einer Fräskopfspindel" vorgesehen ist, soll in diesem Zusammenhang insbesondere verstanden werden, dass eine Fräskopfspindel insbesondere zumindest während eines Einbringens der Planetenaufnahme, insbesondere mittels eines Scheibenfräsers, zumindest teilweise in die Materialaussparung hineinragt. Unter einem "Scheibenfräser" soll in diesem Zusammenhang insbesondere ein Fräswerkzeug verstanden werden, welches zumindest einen kreisscheibenförmigen Fräskopf und eine Antriebsspindel aufweist, welche zumindest im Wesentlichen senkrecht zum Fräskopf angeordnet ist. Insbesondere verläuft die Fräskopfspindel während eines Einbringens der Planetenaufnahme zumindest im Wesentlichen parallel zu einer Rotationsachse der Zwischenwelle. Hierdurch kann ein vorteilhaft einfaches Einbringen der Planetenradaufnahme ermöglicht werden.

Zudem wird ein Verfahren zur Herstellung einer erfindungsgemäßen Handwerkzeugmaschinenvorrichtung, bei welchem die Planetenradaufnahmen mittels eines Scheibenfräsers in die Zwischenwelle eingebracht werden, vorgeschlagen. Insbesondere wird der Scheibenfräser derart an die Zwischenwelle herangeführt, dass die Fräskopfspindel des Scheibenfräsers zu jedem Zeitpunkt zumindest im Wesentlichen parallel zu einer Haupterstreckungsrichtung der Zwischenwelle verläuft. Unter einer "Haupterstreckungsrichtung" eines Objekts soll dabei insbesondere eine Richtung verstanden werden, welche parallel zu einer längsten Kante eines kleinsten geometrischen Quaders verläuft, welcher das Objekt gerade noch vollständig umschließt. Bei dem erfindungsgemäßen Verfahren wird während eines Einbringens der Planetenradaufnahmen eine Spindel des Scheibenfräsers zumindest teilweise in eine Materialaussparung eingeführt. Die Planetenradaufnahmen werden vorzugsweise in einem gemeinsamen Verfahrensschritt zumindest im Wesentlichen zeitgleich in die Zwischenwelle eingebracht werden. Hierdurch kann ein vorteilhaft einfaches und/oder schnelles Einbringen von Planetenradaufnahmen erfolgen.

Ferner wird eine Handwerkzeugmaschine, insbesondere ein Drehschlagschrauber, mit zumindest einer erfindungsgemäßen Handwerkzeugmaschinenvorrichtung vorgeschlagen. Hierdurch kann eine Handwerkzeugmaschine, insbesondere ein Drehschlagschrauber, mit vorteilhaften konstruktiven Eigenschaften bereitgestellt werden.

Die erfindungsgemäße Handwerkzeugmaschinenvorrichtung soll hierbei nicht auf die oben beschriebene Anwendung und Ausführungsform beschränkt sein. Insbesondere kann die erfindungsgemäße Handwerkzeugmaschinenvorrichtung zu einer Erfüllung einer hierin beschriebenen Funktionsweise eine von einer hierin genannten Anzahl von einzelnen Elementen, Bauteilen und Einheiten abweichende Anzahl aufweisen. Zeichnung

Weitere Vorteile ergeben sich aus der folgenden Zeichnungsbeschreibung. In der Zeichnung sind drei Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematischen Teilschnittdarstellung einer Handwerkzeugmaschine welche als ein Drehschlagschrauber ausgebildet ist,
- Fig. 2: eine Schnittdarstellung einer Handwerkzeugmaschinenvorrichtung der Handwerkzeugmaschine mit einer Antriebseinheit und einem Drehschlagwerk,
- Fig. 3: eine Zwischenwelle der Handwerkzeugmaschinenvorrichtung aus Figur 2 in einer perspektivischen Darstellung,
- Fig. 4: eine Schnittdarstellung der Zwischenwelle aus Figur 3,
- Fig. 5: eine schematische Darstellung eines Einbringens von Planetenradaufnahmen in die Zwischenwelle,
- Fig. 6: die Handwerkzeugmaschine in einer Frontalansicht,
- Fig. 7: eine Schnittdarstellung der Handwerkzeugmaschine,
- Fig. 8: eine Schnittdarstellung einer alternativen Handwerkzeugmaschinenvorrichtung und
- Fig. 9: eine Schnittdarstellung einer weiteren alternativen Handwerkzeugmaschinenvorrichtung.

### Beschreibung der Ausführungsbeispiele

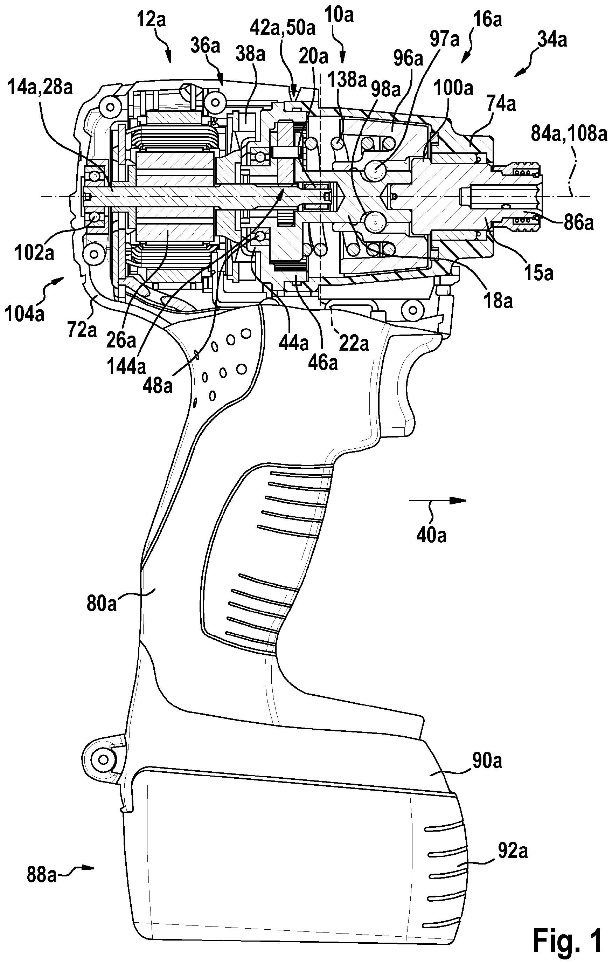

Figur 1 zeigt eine Handwerkzeugmaschine 34a, welche als ein Drehschlagschrauber ausgebildet ist, in einer schematischen Teilschnittdarstellung. Die Handwerkzeugmaschine 34a ist als ein Akku-Drehschlagschrauber ausgebildet. Die Handwerkzeugmaschine 34a umfasst einen Handgriff 80, der sich senkrecht zu einer Rotationsachse 84a einer zur Aufnahme eines Einsatzwerkzeugs (hier nicht dargestellt) vorgesehenen Werkzeugaufnahme 86a der Handwerkzeugmaschine 34a erstreckt. Der Handgriff 80a umfasst an einer der Handwerkzeugmaschine 34a abgewandten Seite 88a eine Akkuaufnahme 90a. Die Akkuaufnahme 90a ist dazu vorgesehen, eine Akkueinheit 92a zur Energieversorgung der Handwerkzeugmaschine 34a aufzunehmen.

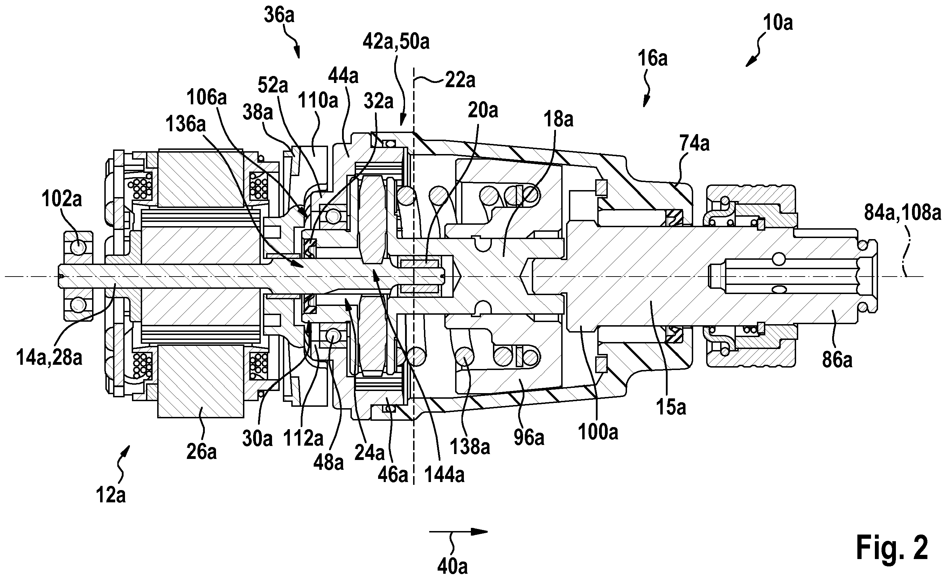

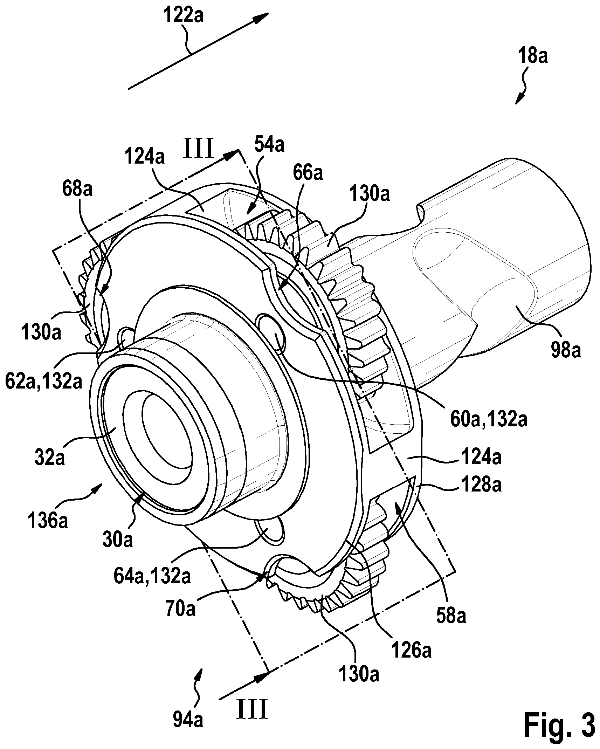

Ferner weist die Handwerkzeugmaschine 34a eine Handwerkzeugmaschinenvorrichtung 10a mit einer Antriebseinheit 12a und einem Drehschlagwerk 16a auf. Figur 2 zeigt die Handwerkzeugmaschinenvorrichtung 10 in einer Schnittdarstellung. Die Handwerkzeugmaschinenvorrichtung 10a weist ein Antriebsgehäuse 72a und ein Schlagwerksgehäuse 74a auf (vgl. Figur 1). Das Antriebsgehäuse 72a umschließt die Antriebseinheit 12a zumindest im Wesentlichen vollständig. Das Schlagwerksgehäuse 74a umschließt das Drehschlagwerk 16a zumindest im Wesentlichen vollständig (vgl. Figur 1). Die Antriebseinheit 12a ist als eine elektrische Antriebseinheit ausgebildet, welche mittels der Akkueinheit 92a mit elektrischer Energie versorgt wird. Die Antriebseinheit 12a weist einen gehäuselosen Elektromotor 26a auf, welcher dazu vorgesehen ist, die von der Akkueinheit 92a bereitgestellte elektrische Energie in Rotationsenergie umzuwandeln. Der Elektromotor 26a ist als Open-Frame Motor ausgebildet, bei dem Bauteile des Elektromotors 26a einzeln im Antriebsgehäuse 72a gelagert sind. Ferner weist die Antriebseinheit 12a eine Antriebswelle 14a auf, welche dazu vorgesehen ist, die Rotationsenergie an das Drehschlagwerk 16a zu übertragen. Die Antriebswelle 14a ist vollständig von einer Ankerwelle 28a des gehäuselosen Elektromotors 26a gebildet. Die Ankerwelle 28a ist einteilig ausgeführt. Das Drehschlagwerk 16a ist als ein V-Nutendrehschlagwerk ausgebildet. Das Drehschlagwerk 16a ist dazu vorgesehen eine kontinuierliche Leistungsabgabe der Antriebseinheit 12a in einen schlagförmigen Drehimpuls umzusetzen. Die Leistung der Antriebseinheit 12a wird durch einen Schlag eines Schlägers 96a des Drehschlagwerks 16a auf einen korrespondierenden Amboss 100a einer Abtriebsspindel 15a mittels eines Impulses hoher Leistungsintensität an das Einsatzwerkzeug weitergegeben. Der Amboss 100a ist in der dargestellten Ausführungsform einstückig mit der Abtriebsspindel 15a und der Werkzeugaufnahme 86a ausgebildet. Der Schläger 96a ist derart gelagert, dass eine Axialbewegung und Radialbewegung möglich ist. Die Steuerung der Axialbewegung erfolgt durch V-förmige Nuten 98 (vgl. Figur 3) und Mitnehmerkugeln 97a (vgl. Figur 1). Eine Feder 138a sorgt für die Rückstellbewegung des Schlägers 96a.

Das Drehschlagwerk 16a weist eine Zwischenwelle 18a auf, welche zumindest im Wesentlichen fluchtend zu der Antriebswelle 14a ausgerichtet ist. Des Weiteren weist die Handwerkzeugmaschinenvorrichtung 10a zumindest ein Lager 20a zur Lagerung der Antriebswelle 14a auf. Das Lager 20a ist zumindest teilweise in einer die Zwischenwelle 18a schneidenden Ebene 22a angeordnet, welche zumindest im Wesentlichen senkrecht zur Zwischenwelle 18a verläuft. Die Antriebswelle 14a ist zumindest teilweise innerhalb der Zwischenwelle 18a gelagert. Die Zwischenwelle 18a weist eine Aufnahmeausnehmung 24a auf, welche zu einer zumindest teilweisen Aufnahme der Antriebswelle 14a vorgesehen ist. Die Aufnahmeausnehmung 24a erstreckt sich zumindest im Wesentlichen entlang einer Rotationsachse 108a der Zwischenwelle 18a. Die Antriebswelle 14a ragt in einem montierten Zustand zumindest teilweise in die Zwischenwelle 18a, insbesondere in die Aufnahmeausnehmung 24a der Zwischenwelle 18a, hinein. Das Lager 20a zur Lagerung der Antriebswelle 14a ist innerhalb der Aufnahmeausnehmung 24a angeordnet. Das Lager 20a zur Lagerung der Antriebswelle 14a ist als ein Wälzlager ausgebildet. Die Zwischenwelle 18a weist ferner eine Dichtelementaufnahme 30a auf. Die Dichtelementaufnahme 30a ist unmittelbar an einer Einführöffnung 136a der Aufnahmeausnehmung 24a der Zwischenwelle 18a angeordnet, welche dazu vorgesehen ist, die Antriebswelle 14a in die Zwischenwelle 18a einzuführen. Zudem weist die Zwischenwelle 18a zumindest ein in der Dichtelementaufnahme 30a angeordnetes Dichtelement 32a auf. Das Dichtelement 32a ist als ein Wellendichtring, insbesondere als ein Radial-Wellendichtring ausgebildet, welcher in einem montierten Zustand zwischen der Antriebswelle 14a und der Zwischenwelle 18a angeordnet ist. Die Dichtelementaufnahme 30a ist als eine Wellendichtringaufnahme ausgebildet. Ein weiteres Lager 102a zur Lagerung der Antriebswelle 14a ist an einer der Werkzeugaufnahme 86a abgewandten Seite 104a des Elektromotors 26a im Antriebsgehäuse 72a angeordnet.

Zudem weist die Handwerkzeugmaschinenvorrichtung 10a eine Kühllufteinheit 36a auf, welche zumindest ein zwischen der Antriebseinheit 12a und dem Drehschlagwerk 16a angeordnetes Lüfterrad 38a umfasst. Das Lüfterrad 38a ist insbesondere zur Erzeugung eines Kühlluftstroms zu einer Kühlung des Drehschlagwerks 16a und/oder der Antriebseinheit 12a vorgesehen. Das Lüfterrad 38a ist drehfest auf der Antriebswelle 14a der Antriebseinheit 12a angeordnet. Die Antriebseinheit 12a ist dazu vorgesehen, das Lüfterrad 38a während eines Betriebs der Handwerkzeugmaschine 34a in eine Rotationsbewegung zu versetzen. Das Lüfterrad 38a und das Drehschlagwerk 16a überlappen sich zumindest teilweise in axialer Richtung 40a. Vorzugsweise überragt das Lüfterrad 38a das Drehschlagwerk 16a in axialer Richtung 40a zumindest teilweise. Das Lüfterrad 38a weist eine Mehrzahl von in Umfangsrichtung angeordneter Lüfterradflügel 110a auf, welche zumindest einen Teil des Drehschlagwerks 16a in Umfangsrichtung übergreifen. Die Lüfterradflügel 110a erstecken sich zumindest im Wesentlichen in axialer Richtung 40a. Das Drehschlagwerk 16a weist zumindest eine als ein einstufiges Planetengetriebe 50a ausgebildete Getriebeeinheit 42a auf. Das Lager 20a zur Lagerung der Antriebswelle 14a ist auf einer der Antriebseinheit 12a abgewandten Seite des Planetengetriebes 50a angeordnet. Eine Verzahnung 144a zwischen der Antriebswelle 14a und dem Planetengetriebe 50a ist zwischen dem Lager 20a und dem Lager 102a angeordnet. Alternativ kann die Getriebeeinheit 42a als ein mehrstufiges Planetengetriebe ausgebildet sein. Vorzugsweise überlappen sich das Lüfterrad 38a und zumindest die Getriebeeinheit 42a zumindest teilweise in axialer Richtung 40a. Das Planetengetriebe 50a umfasst zumindest ein Hohlrad 46a. Ferner umfasst das Drehschlagwerk 16a einen Schlagwerkdeckel 44a. Der Schlagwerkdeckel 44a ist zwischen der Antriebseinheit 12a und dem Planetengetriebe 50a angeordnet. Insbesondere ist der Schlagwerkdeckel 44a dazu vorgesehen, das Drehschlagwerk 16a in Richtung der Antriebseinheit 12a, zumindest zu einem Großteil zu verschließen. Der Schlagwerkdeckel 44a weist eine Durchführungsausnehmung 106a auf, welche zu einer zumindest teilweisen Durchführung zumindest der Antriebswelle 14a vorgesehen ist. Der Schlagwerkdeckel 44a ist einstückig mit dem Hohlrad 46a ausgebildet. Der Schlagwerkdeckel 44a und das Hohlrad 46a bestehen zumindest im Wesentlichen aus einem metallischen Material, insbesondere aus einem metallischen Sintermaterial. Vorzugsweise überlappen sich das Lüfterrad 38a und zumindest der Schlagwerkdeckel 44a zumindest teilweise in axialer Richtung 40a.

Die Handwerkzeugmaschinenvorrichtung 10 weist ferner ein Zwischenwellenlager 48a zur Lagerung der Zwischenwelle 18a auf. Das Zwischenwellenlager 48a ist als ein Wälzlager ausgebildet. Alternativ kann das Zwischenwellenlager 48a als ein Gleitlager ausgebildet sein. Das Zwischenwellenlager 48a ist als ein Radiallager ausgebildet, welches dazu vorgesehen die Zwischenwelle 18a drehbar in dem Schlagwerkdeckel 44a zu lagern. Das Zwischenwellenlager 48a ist zumindest teilweise innerhalb eines Schlagwerkdeckels 44a des Drehschlagwerks 16a angeordnet. Das Zwischenwellenlager 48a ist unmittelbar an der Durchführungsausnehmung 106a des Schlagwerkdeckels 44a angeordnet. Das Zwischenwellenlager 48a ist auf der Werkzeugaufnahme 86a zugewandten Seite des Schlagwerkdeckels 44a angeordnet. Der Schlagwerkdeckel 44a weist zumindest eine Lageraufnahme 52a auf, welche zu einer Aufnahme des Zwischenwellenlagers 48a vorgesehen ist. Die Lageraufnahme 52a ist einstückig mit dem Schlagwerkdeckel 44a ausgebildet. Die Lageraufnahme 52a ist im Bereich der Durchführungsausnehmung 106a des Schlagwerkdeckels 44a angeordnet. Die Lageraufnahme 52a ist zumindest im Wesentlichen hohlzylindrisch ausgebildet. Die Lageraufnahme 52a weist an einem dem Schlagwerkdeckel 44a abgewandten Ende ein zumindest im Wesentlichen ringförmiges Anschlagelement 112a für das Zwischenwellenlager 48a auf. Das Anschlagelement 112a ist einstückig mit der Lageraufnahme 52a ausgebildet. Ein Innendurchmesser der Lageraufnahme 52a entspricht zumindest im Wesentlichen einem Außendurchmesser des Zwischenwellenlagers 48a. Vorzugsweise ist das Zwischenwellenlager 48a durch einen Presssitz in der Lageraufnahme 52a fixiert. Vorzugsweise überlappen sich das Lüfterrad 38a und zumindest das Zwischenwellenlager 48a und/oder die Zwischenwelle 18a zumindest teilweise in axialer Richtung 40a.

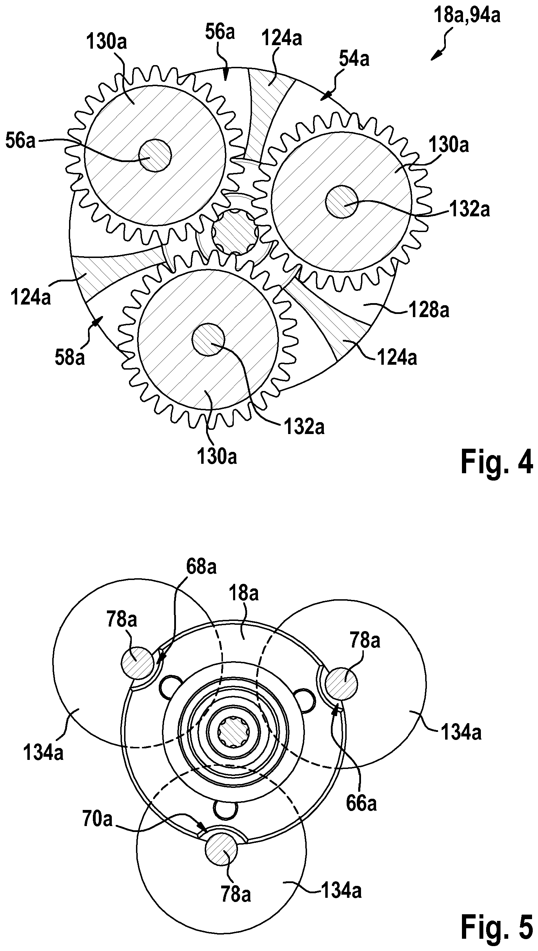

Figur 3 zeigt die Zwischenwelle 18a in einer perspektivischen Darstellung. Figur 4 zeigt die Zwischenwelle 18a in einer Schnittdarstellung entlang der Schnittebene III - III. Die Zwischenwelle 18a ist als Planetenradträger 94a des Planetengetriebes 50a ausgebildet. Die Zwischenwelle 18a weist eine in Umfangsrichtung angeordnete Mehrzahl von Planetenradaufnahmen 54a, 56a, 58a und Planetenradlagerstellen 60a, 62a, 64a auf. In jeder Planetenradaufnahme 54a, 56a, 58a ist jeweils ein Planetenrad 130a angeordnet, welches mittels eines Stifts 132a drehbar gelagert ist. Die Zwischenwelle 18a weist zumindest im Bereich zumindest einer Planetenradlagerstelle 60a, 62a, 64a an seinem Außenumfang zumindest eine Materialaussparung 66a, 68a, 70a auf. Eine Anzahl von Materialaussparungen 66a, 68a, 70a entspricht einer Anzahl von Planetenradaufnahmen 54a, 56a, 58a. Jeder Planetenradaufnahme 54a, 56a, 58a ist genau eine Materialaussparung 66a, 68a, 70a zugeordnet. Die Zwischenwelle 18a weist drei Planetenradaufnahmen 54a, 56a, 58a mit jeweils einer Planetenradlagerstelle 60a, 62a, 64a auf. Die Planetenradlagerstellen 60a, 62a, 64a sind zumindest im Wesentlichen um jeweils 120° versetzt zueinander in Umfangsrichtung an der Zwischenwelle 18a angeordnet. Die Planetenradaufnahmen 54a, 56a, 58a sind durch sich radial zu einer Längserstreckungsrichtung 122a der Zwischenwelle 18a erstreckende Stege 124a voneinander getrennt. Entlang der Längserstreckungsrichtung 122a der Zwischenwelle 18a betrachtet, sind die Planetenradaufnahmen 54a, 56a, 58a durch zwei scheibenförmige Wandungselemente 126a, 128a begrenzt, welche zumindest im Wesentlichen senkrecht zur Längserstreckungsrichtung 122a angeordnet sind. Die Wandungselemente 126a, 128a sind zumindest im Wesentlichen kreisförmig ausgebildet. Die Wandungselemente 126a, 128a sind einstückig mit der Zwischenwelle 18a ausgebildet. Die Materialaussparungen 66a, 68a, 70a sind zumindest im Wesentlichen kreissegmentförmig ausgebildet. Die Planetenradaufnahmen 54a, 56a, 58a sind zumindest im Wesentlichen zylindersegmentförmig ausgebildet. Die Materialaussparungen 66a, 68a, 70a sind in eines der Wandungselemente 126a, 128a eingebracht. Die Materialaussparung 66a, 68a, 70a sind in das Wandungselement 126a eingebracht, welches in einem montierten Zustand der Zwischenwelle 18a in Richtung einer Antriebseinheit 12a angeordnet ist. Die Wandungselemente 126a, 128a weisen einen zumindest im Wesentlichen identischen Radius auf. Alternativ kann eines der Wandungselemente 126a, 128a einen geringeren Radius aufweisen.

Die Materialaussparungen 66a, 68a, 70a sind bei einer Herstellung der Zwischenwelle 18a zu einer zeitweisen zumindest teilweisen Aufnahme einer Fräskopfspindel 78a vorgesehen (vgl. Figur 5). Die Planetenradaufnahmen 54a, 56a, 58a werden mittels eines Scheibenfräsers 134a in einen Rohling der Zwischenwelle 18a eingebracht. Während des Einbringens der Planetenradaufnahmen 54a, 56a, 58a wird eine Fräskopfspindel 78a des Scheibenfräsers 134a zumindest teilweise in eine Materialaussparung 66a, 68a, 70a eingeführt. Vorzugsweise werden die Planetenradaufnahmen 54a, 56a, 58a in einem gemeinsamen Verfahrensschritt zumindest im Wesentlichen zeitgleich in die Zwischenwelle 18a, insbesondere mittels einer Mehrzahl identischer Scheibenfräser 134a, eingebracht. Die Scheibenfräser 134a werden derart an die Zwischenwelle 18a herangeführt, dass die Fräskopfspindeln 78a zu jedem Zeitpunkt zumindest im Wesentlichen parallel zu einer Längserstreckungsrichtung 122a der Zwischenwelle 18a verlaufen.

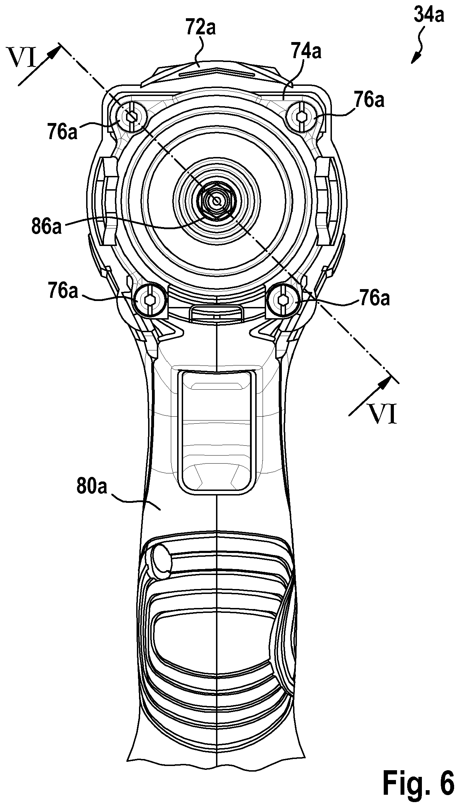

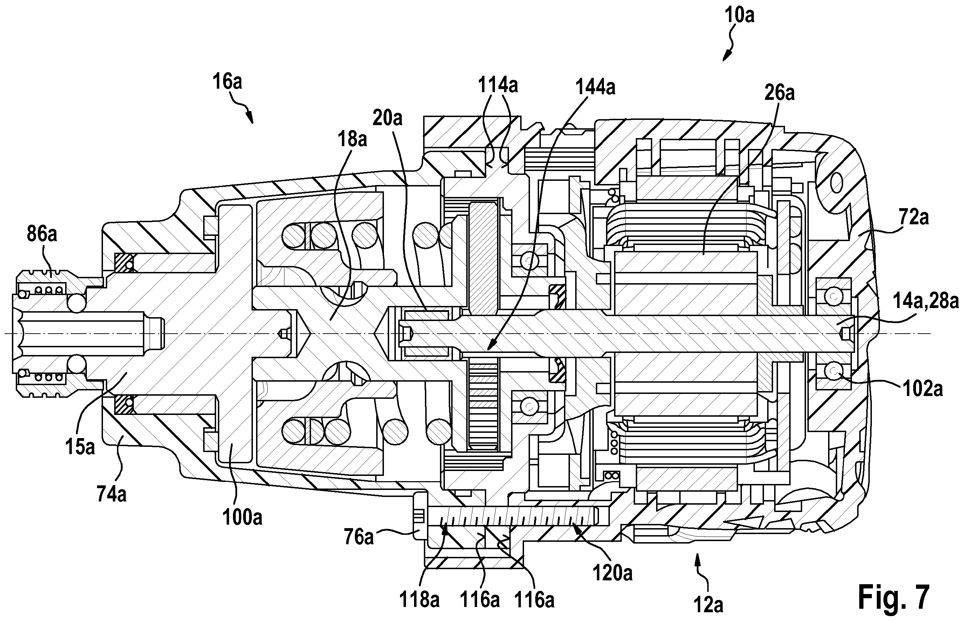

Figur 6 zeigt die Handwerkzeugmaschine 34a in einer Frontalansicht. Figur 7 zeigt eine Schnittdarstellung der Handwerkzeugmaschine 34a entlang der Schnittlinie VI - VI. Das Hohlrad 46a des Planetengetriebes 50a ist zwischen das Antriebsgehäuse 72a und das Schlagwerksgehäuse 74a geklemmt. Das Antriebsgehäuse 72a und das Schlagwerksgehäuse 74a weisen eine Klemmfläche 114a auf, welche in einem montierten Zustand jeweils von gegenüberliegenden Seiten an zumindest einer Fläche 116a des Hohlrads 46a anliegen und welche jeweils eine Klemmkraft auf das Hohlrad 46a ausüben. Das Hohlrad 46a ist mittels zumindest eines Schraubelements 76a, vorzugsweise mittels zumindest einer Schraube, an dem Antriebsgehäuse 72a fixiert. Das Hohlrad 46a ist beispielhaft mit vier Schraubelementen 76a fixiert. Das Hohlrad 46a weist an einem Außenumfang Ausnehmungen 118a auf, welche zu einem Hindurchführen der Schraubelemente 76a vorgesehen sind. Das Antriebsgehäuse 72a weist eine zur Anzahl der Schraubelemente 76a korrespondierende Anzahl von Gewindeausnehmung 120a auf, welche ein zu einem Gewinde der Schraubelemente 76a korrespondierendes Gewinde aufweisen. Das Antriebsgehäuse 72a, das Schlagwerksgehäuse 74a und das Hohlrad 46a sind in einem montierten Zustand mittels der Schraubelemente 76a miteinander verbunden, wobei das Hohlrad 46a zwischen dem Antriebsgehäuse 72a und dem Schlagwerksgehäuse 74a angeordnet ist. Alternativ oder zusätzlich kann das Hohlrad 46a mittels zumindest eines Schraubelements 76a an dem Schlagwerksgehäuse 74a fixiert sein.

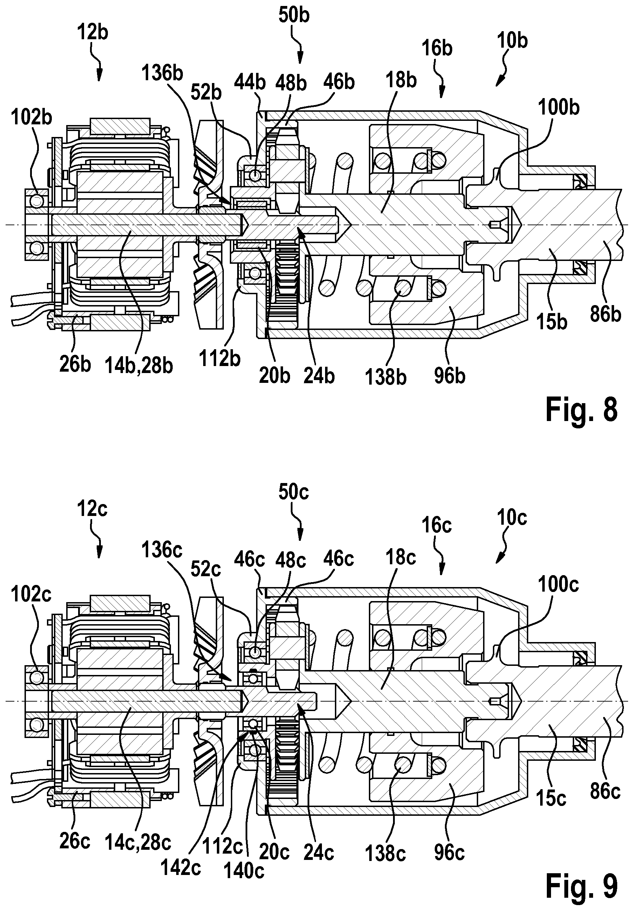

In den Figuren 8 und 9 ist eine nicht erfindungsgemäße Ausgestaltung der Handwerkzeugmaschinenvorrichtung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Figuren 1 bis 7, verwiesen werden kann. Zur Unterscheidung der Ausführungsbeispiele ist der Buchstabe a den Bezugszeichen des Ausführungsbeispiels in den Figuren 1 bis 7 nachgestellt. In den Ausführungsbeispielen der Figuren 1 bis 7 ist der Buchstabe a durch die Buchstaben b bis c ersetzt. Figur 8 zeigt eine alternative Ausgestaltung der Handwerkzeugmaschinenvorrichtung 10b in einer Schnittdarstellung. Die Handwerkzeugmaschinenvorrichtung 10b weist eine Antriebseinheit 12b und einem Drehschlagwerk 16b mit einem Planetengetriebe 50b auf. Die Antriebseinheit 12b weist einen gehäuselosen Elektromotor 26b auf, welcher dazu vorgesehen ist, elektrische Energie in Rotationsenergie umzuwandeln. Der Elektromotor 26b ist als Open-Frame Motor ausgebildet. Ferner weist die Antriebseinheit 12b eine Antriebswelle 14b auf, welche dazu vorgesehen ist, die Rotationsenergie an das Drehschlagwerk 16b zu übertragen. Die Antriebswelle 14b ist teilweise von einer Ankerwelle 28b des gehäuselosen Elektromotors 26b gebildet.

Das Drehschlagwerk 16b weist eine Zwischenwelle 18b auf, welche zumindest im Wesentlichen fluchtend zu der Antriebswelle 14b ausgerichtet ist. Des Weiteren weist die Handwerkzeugmaschinenvorrichtung 10b zumindest ein Lager 20b zur Lagerung der Antriebswelle 14b auf. Die Antriebswelle 14b ist zumindest teilweise innerhalb der Zwischenwelle 18b gelagert. Die Zwischenwelle 18b weist eine Aufnahmeausnehmung 24b auf, welche zu einer zumindest teilweisen Aufnahme der Antriebswelle 14b vorgesehen ist. Das Lager 20b ist unmittelbar an einer Einführöffnung 136b der Aufnahmeausnehmung 24b der Zwischenwelle 18b angeordnet, welche dazu vorgesehen ist, die Antriebswelle 14b in die Zwischenwelle 18b einzuführen. Das Lager 20b zur Lagerung der Antriebswelle 14b ist auf einer der Antriebseinheit 12b zugewandten Seite des Planetengetriebes 50b angeordnet. Das Lager 20b ist als ein Rollenlager ausgebildet. Figur 9 zeigt eine weitere alternative Ausgestaltung der Handwerkzeugmaschinenvorrichtung 10c in einer Schnittdarstellung. Die Handwerkzeugmaschinenvorrichtung 10c weist eine Antriebseinheit 12c und einem Drehschlagwerk 16c mit einem Planetengetriebe 50c auf. Die Antriebseinheit 12c weist einen gehäuselosen Elektromotor 26c auf, welcher dazu vorgesehen ist, elektrische Energie in Rotationsenergie umzuwandeln. Der Elektromotor 26c ist als Open-Frame Motor ausgebildet. Ferner weist die Antriebseinheit 12c eine Antriebswelle 14b auf, welche dazu vorgesehen ist, die Rotationsenergie an das Drehschlagwerk 16c zu übertragen. Die Antriebswelle 14c ist teilweise von einer Ankerwelle 28c des gehäuselosen Elektromotors 26c gebildet.

Das Drehschlagwerk 16c weist eine Zwischenwelle 18c auf, welche zumindest im Wesentlichen fluchtend zu der Antriebswelle 14c ausgerichtet ist. Des Weiteren weist die Handwerkzeugmaschinenvorrichtung 10c zumindest ein Lager 20c zur Lagerung der Antriebswelle 14c auf. Die Antriebswelle 14c ist zumindest teilweise innerhalb der Zwischenwelle 18c gelagert. Die Zwischenwelle 18c weist eine Aufnahmeausnehmung 24c auf, welche zu einer zumindest teilweisen Aufnahme der Antriebswelle 14c vorgesehen ist. Das Lager 20c ist unmittelbar an einer Einführöffnung 136c der Aufnahmeausnehmung 24c der Zwischenwelle 18c angeordnet, welche dazu vorgesehen ist, die Antriebswelle 14c in die Zwischenwelle 18c einzuführen. Das Lager 20c zur Lagerung der Antriebswelle 14c ist auf einer der Antriebseinheit 12c zugewandten Seite des Planetengetriebes 50c angeordnet. Das Lager 20c ist als ein Kugellagerlager ausgebildet. Ferner weist die Handwerkzeugmaschinenvorrichtung 10c einen Dichtring 140c auf, welcher das Lager 20c in Umfangsrichtung umschließt und welcher zwischen dem Lager 20c und einem Innendurchmesser Aufnahmeausnehmung 24c der Zwischenwelle 18c angeordnet ist. Die Zwischenwelle 18c weist eine Nut 142c auf, welche zu einer Aufnahme des Dichtrings 140c vorgesehen ist.

## Patentansprüche

1. Handwerkzeugmaschinenvorrichtung mit zumindest einer Zwischenwelle (18a; 18b; 18c), welche als ein Planetenradträger ausgebildet ist und eine in Umfangsrichtung angeordnete Mehrzahl von Planetenradaufnahmen (54a-c, 56a-c, 58a-c) und Planetenradlagerstellen (60a-c, 62a-c, 64a-c) aufweist, wobei die Zwischenwelle (18a; 18b; 18c) zumindest im Bereich zumindest einer Planetenradlagerstelle (60a-c, 62a-c, 64a-c) an seinem Außenumfang zumindest eine Materialaussparung (66a-c, 68a-c, 70a-c) aufweist, wobei die zumindest eine Planetenradlagerstelle (60a-c, 62a-c, 64a-c) entlang einer radialen Richtung zwischen einer Rotationsachse (108a) der Zwischenwelle (18a; 18b; 18c) und der zumindest einen Materialaussparung (66a-c, 68a-c, 70a-c) angeordnet ist, **dadurch gekennzeichnet, dass** die Materialaussparung (66a-c, 68a-c, 70a-c) bei einer Herstellung der Planetenradaufnahme der Zwischenwelle (18a; 18b; 18c) zu einer zeitweisen zumindest teilweisen Aufnahme einer Fräskopfspindel vorgesehen ist.

2. Handwerkzeugmaschinenvorrichtung nach Anspruch 1, **dadurch gekennzeichnet, dass** die Materialaussparung (66a-c, 68a-c, 70a-c) zumindest im Wesentlichen kreissegmentförmig ist.

3. Handwerkzeugmaschinenvorrichtung nach Anspruch 1 oder 2, **dadurch gekennzeichnet, dass** eine Anzahl von Materialaussparungen (66a-c, 68a-c, 70a-c) einer Anzahl von Planetenradaufnahmen (54a-c, 56a-c, 58a-c) entspricht.

4. Handwerkzeugmaschinenvorrichtung nach Anspruch 3, **dadurch gekennzeichnet, dass** jeder Planetenradaufnahme (54a-c, 56a-c, 58a-c) genau eine Materialaussparung (66a-c, 68a-c, 70a-c) zugeordnet ist.

5. Handwerkzeugmaschinenvorrichtung nach einem der vorhergehenden Ansprüche, **dadurch gekennzeichnet, dass** die Planetenradaufnahmen (54a-c, 56a-c, 58a-c) zumindest im Wesentlichen zylindersegmentförmig ausgebildet sind.

6. Handwerkzeugmaschinenvorrichtung nach einem der vorhergehenden Ansprüche, **dadurch gekennzeichnet, dass** die zumindest eine Planetenradlagerstelle (60a-c, 62a-c, 64a-c) kreisförmig ausgebildet ist.

7. Handwerkzeugmaschinenvorrichtung nach einem der vorhergehenden Ansprüche, **dadurch gekennzeichnet, dass** die Planetenradlagerstellen (60a-c, 62a-c, 64a-c) zumindest im Wesentlichen um jeweils 120° versetzt zueinander in Umfangsrichtung an der Zwischenwelle (18a; 18b; 18c) angeordnet sind.

8. Handwerkzeugmaschinenvorrichtung nach einem der vorhergehenden Ansprüche, **dadurch gekennzeichnet, dass** die Planetenradaufnahmen (54a-c, 56a-c, 58a-c) durch sich radial zu einer Längserstreckungsrichtung (122a) der Zwischenwelle (18a; 18b; 18c) erstreckende Stege (124a) voneinander getrennt sind.

9. Handwerkzeugmaschinenvorrichtung nach einem der vorhergehenden Ansprüche, **dadurch gekennzeichnet, dass** die Planetenradaufnahmen (54a-c, 56a-c, 58a-c) entlang einer Längserstreckungsrichtung (122a) der Zwischenwelle (18a; 18b; 18c) durch zwei scheibenförmige Wandungselemente (126a, 128a) begrenzt sind, welche zumindest im Wesentlichen senkrecht zur Längserstreckungsrichtung (122a) angeordnet sind.

10. Handwerkzeugmaschinenvorrichtung nach Anspruch 9, **dadurch gekennzeichnet, dass** die zumindest eine Materialaussparung (66a-c, 68a-c, 70a-c) in eines der Wandungselemente (126a, 128a) eingebracht ist.

11. Handwerkzeugmaschinenvorrichtung nach Anspruch 9 oder 10, **dadurch gekennzeichnet, dass** die Materialaussparung (66a-c, 68a-c, 70a-c) in das Wandungselement (126a) eingebracht ist, welches in einem montierten Zustand der Zwischenwelle (18a; 18b; 18c) in einer Handwerkzeugmaschine (34a) in Richtung einer Antriebseinheit (12a; 12b; 12c) angeordnet ist.

12. Handwerkzeugmaschinenvorrichtung nach einem der vorhergehenden Ansprüche, **dadurch gekennzeichnet, dass** in jeder Planetenradaufnahme (54a-c, 56a-c, 58a-c) jeweils ein Planetenrad (130a) angeordnet ist, welches mittels eines Stifts (132a) drehbar gelagert ist.

13. Verfahren zur Herstellung einer Handwerkzeugmaschinenvorrichtung (10) nach einem der vorhergehenden Ansprüche, wobei die Planetenradaufnahmen (54a-c, 56a-c, 58a-c) mittels eines Scheibenfräsers in die Zwischenwelle (18a; 18b; 18c) eingebracht werden, **dadurch gekennzeichnet, dass** während eines Einbringens der Planetenradaufnahmen (54a-c, 56a-c, 58a-c) eine Spindel des Scheibenfräsers zumindest teilweise in eine Materialaussparung (66a-c, 68a-c, 70a-c) eingeführt wird.

14. Verfahren nach Anspruch 13, **dadurch gekennzeichnet, dass** die Planetenradaufnahmen (54a-c, 56a-c, 58a-c) in einem gemeinsamen Verfahrensschritt zumindest im Wesentlichen zeitgleich in die Zwischenwelle (18a; 18b; 18c) eingebracht werden.

15. Handwerkzeugmaschine mit zumindest einer Handwerkzeugmaschinenvorrichtung (10a; 10b; 10c) nach einem der Ansprüche 1 bis 12.

## Claims

1. Hand-held power tool device having at least one intermediate shaft (18a; 18b; 18c) which is in the form of a planet carrier and has a plurality of planet gear receptacles (54a-c, 56a-c, 58a-c) and planet gear bearing points (60a-c, 62a-c, 64a-c) arranged in a circumferential direction, wherein the intermediate shaft (18a; 18b; 18c) has at least one material cutout (66a-c, 68a-c, 70a-c) in its outer circumference at least in the region of at least one planet gear bearing point (60a-c, 62a-c, 64a-c), wherein the at least one planet gear bearing point (60a-c, 62a-c, 64a-c) is arranged along a radial direction between an axis of rotation (108a) of the intermediate shaft (18a; 18b; 18c) and the at least one material cutout (66a-c, 68a-c, 70a-c), **characterized in that** the material cutout (66a-c, 68a-c, 70a-c), when the planet gear receptacle of the intermediate shaft (18a; 18b; 18c) is being produced, is provided to temporarily at least partially receive a milling head spindle.

2. Hand-held power tool device according to Claim 1, **characterized in that** the material cutout (66a-c, 68a-c, 70a-c) is at least substantially in the form of a circle segment.

3. Hand-held power tool device according to Claim 1 or 2, **characterized in that** a number of material cutouts (66a-c, 68a-c, 70a-c) corresponds to a number of planet gear receptacles (54a-c, 56a-c, 58a-c) .

4. Hand-held power tool device according to Claim 3, **characterized in that** each planet gear receptacle (54a-c, 56a-c, 58a-c) is assigned precisely one material cutout (66a-c, 68a-c, 70a-c).

5. Hand-held power tool device according to one of the preceding claims, **characterized in that** the planet gear receptacles (54a-c, 56a-c, 58a-c) are at least substantially in the form of a cylinder segment.

6. Hand-held power tool device according to one of the preceding claims, **characterized in that** the at least one planet gear bearing point (60a-c, 62a-c, 64a-c) is circular.

7. Hand-held power tool device according to one of the preceding claims, **characterized in that** the planet gear bearing points (60a-c, 62a-c, 64a-c) are arranged on the intermediate shaft (18a; 18b; 18c) so as to be offset at least substantially through 120° with respect to one another in the circumferential direction.

8. Hand-held power tool according to one of the preceding claims, **characterized in that** the planet gear receptacles (54a-c, 56a-c, 58a-c) are separated from one another by webs (124a) that extend radially with respect to a longitudinal extension direction (122a) of the intermediate shaft (18a; 18b; 18c).

9. Hand-held power tool device according to one of the preceding claims, **characterized in that** the planet gear receptacles (54a-c, 56a-c, 58a-c) are bounded along a longitudinal extension direction (122a) of the intermediate shaft (18a; 18b; 18c) by two disc-like wall elements (126a, 128a) which are arranged at least substantially perpendicularly to the longitudinal extension direction (122a).

10. Hand-held power tool device according to Claim 9, **characterized in that** the at least one material cutout (66a-c, 68a-c, 70a-c) has been introduced into one of the wall elements (126a, 128a).

11. Hand-held power tool device according to Claim 9 or 10, **characterized in that** the material cutout (66a-c, 68a-c, 70a-c) has been introduced into the wall element (126a) which, in a mounted state of the intermediate shaft (18a; 18b; 18c) in a hand-held power tool (34a), is arranged in the direction of a drive unit (12a; 12b; 12c).

12. Hand-held power tool device according to one of the preceding claims, **characterized in that** a respective planet gear (130a) is arranged in each planet gear receptacle (54a-c, 56a-c, 58a-c), said planet gear (130a) being mounted rotatably by means of a pin (132a) .

13. Method for producing a hand-held power tool device (10) according to one of the preceding claims, wherein the planet gear receptacles (54a-c, 56a-c, 58a-c) are introduced into the intermediate shaft (18a; 18b; 18c) by means of a side milling cutter, **characterized in that**, while the planet gear receptacles (54a-c, 56a-c, 58a-c) are being introduced, a spindle of the side milling cutter is passed at least partially into a material cutout (66a-c, 68a-c, 70a-c).

14. Method according to Claim 13, **characterized in that** the planet gear receptacles (54a-c, 56a-c, 58a-c) are introduced at least substantially simultaneously into the intermediate shaft (18a; 18b; 18c) in a common method step.

15. Hand-held power tool having at least one hand-held power tool device (10a; 10b; 10c) according to one of Claims 1 to 12.

## Revendications

1. Dispositif de machine-outil portative comprenant au moins un arbre intermédiaire (18a ; 18b ; 18c), qui est réalisé sous la forme d'un porte-satellites et qui présente une pluralité de logements de satellites (54a-c, 56a-c, 58a-c) et de points d'appui de satellites (60a-c, 62a-c, 64a-c) agencés dans la direction circonférentielle, l'arbre intermédiaire (18a; 18b ; 18c) présentant au moins dans la zone d'au moins un point d'appui de satellite (60a-c, 62a-c, 64a-c) sur sa circonférence extérieure au moins un évidement de matériau (66a-c, 68a-c, 70a-c), l'au moins un point d'appui de satellite (60a-c, 62a-c, 64a-c) étant agencé le long d'une direction radiale entre un axe de rotation (108a) de l'arbre intermédiaire (18a; 18b ; 18c) et l'au moins un évidement de matériau (66a-c, 68a-c, 70a-c), **caractérisé en ce que** l'évidement de matériau (66a-c, 68a-c, 70a-c) est prévu pour recevoir temporairement, au moins partiellement, une broche de tête de fraisage lors d'une fabrication du logement de satellite de l'arbre intermédiaire (18a ; 18b ; 18c).

2. Dispositif de machine-outil portative selon la revendication 1, **caractérisé en ce que** l'évidement de matériau (66a-c, 68a-c, 70a-c) est au moins essentiellement en forme de segment de cercle.

3. Dispositif de machine-outil portative selon la revendication 1 ou 2, **caractérisé en ce qu'un** nombre d'évidements de matériau (66a-c, 68a-c, 70a-c) correspond à un nombre de logements de satellites (54a-c, 56a-c, 58a-c).

4. Dispositif de machine-outil portative selon la revendication 3, **caractérisé en ce qu'**à chaque logement de satellite (54a-c, 56a-c, 58a-c) est associé exactement un évidement de matériau (66a-c, 68a-c, 70a-c) .

5. Dispositif de machine-outil portative selon l'une quelconque des revendications précédentes, **caractérisé en ce que** les logements de satellites (54a-c, 56a-c, 58a-c) sont réalisés au moins essentiellement sous la forme de segments de cylindre.

6. Dispositif de machine-outil portative selon l'une quelconque des revendications précédentes, **caractérisé en ce que** l'au moins un point d'appui de satellite (60a-c, 62a-c, 64a-c) est réalisé sous forme circulaire.

7. Dispositif de machine-outil portative selon l'une quelconque des revendications précédentes, **caractérisé en ce que** les points d'appui de satellites (60a-c, 62a-c, 64a-c) sont agencés sur l'arbre intermédiaire (18a ; 18b ; 18c) au moins essentiellement décalés de 120° les uns par rapport aux autres dans la direction circonférentielle.

8. Dispositif de machine-outil portative selon l'une quelconque des revendications précédentes, **caractérisé en ce que** les logements de satellites (54a-c, 56a-c, 58a-c) sont séparés les uns des autres par des entretoises (124a) s'étendant radialement par rapport à une direction d'extension longitudinale (122a) de l'arbre intermédiaire (18a ; 18b ; 18c).

9. Dispositif de machine-outil portative selon l'une quelconque des revendications précédentes, **caractérisé en ce que** les logements de satellites (54a-c, 56a-c, 58a-c) sont délimités le long d'une direction d'extension longitudinale (122a) de l'arbre intermédiaire (18a; 18b; 18c) par deux éléments de paroi en forme de disque (126a, 128a), qui sont agencés au moins essentiellement perpendiculairement à la direction d'extension longitudinale (122a).

10. Dispositif de machine-outil portative selon la revendication 9, **caractérisé en ce que** l'au moins un évidement de matériau (66a-c, 68a-c, 70a-c) est ménagé dans l'un des éléments de paroi (126a, 128a).

11. Dispositif de machine-outil portative selon la revendication 9 ou 10, **caractérisé en ce que** l'évidement de matériau (66a-c, 68a-c, 70a-c) est ménagé dans l'élément de paroi (126a) qui, dans un état monté de l'arbre intermédiaire (18a ; 18b ; 18c) dans une machine-outil portative (34a), est agencé en direction d'une unité d'entraînement (12a ; 12b ; 12c).

12. Dispositif de machine-outil portative selon l'une quelconque des revendications précédentes, **caractérisé en ce que** dans chaque logement de satellite (54a-c, 56a-c, 58a-c) est agencé respectivement un satellite (130a), qui est monté de manière rotative au moyen d'une tige (132a).

13. Procédé de fabrication d'un dispositif de machine-outil portative (10) selon l'une quelconque des revendications précédentes, les logements de satellites (54a-c, 56a-c, 58a-c) étant ménagés dans l'arbre intermédiaire (18a ; 18b ; 18c) au moyen d'une fraise à disque, **caractérisé en ce que,** pendant le ménagement des logements de satellites (54a-c, 56a-c, 58a-c), une broche de la fraise à disque est introduite au moins partiellement dans un évidement de matériau (66a-c, 68a-c, 70a-c).

14. Procédé selon la revendication 13, **caractérisé en ce que** les logements de satellites (54a-c, 56a-c, 58a-c) sont ménagés dans l'arbre intermédiaire (18a ; 18b ; 18c) au moins essentiellement en même temps, dans une étape de procédé commune.

15. Machine-outil portative comprenant au moins un dispositif de machine-outil portative (10a ; 10b; 10c) selon l'une quelconque des revendications 1 à 12.
